# EUROPEAN PATENT SPECIFICATION

(11) **EP 3 132 919 B1**
(45) Date of publication and mention of the grant of the patent: **27.03.2019**
(21) Application number: 15779686.3
(22) Date of filing: 27.02.2015
(51) Int. Cl.: G06K 19/077, B29C 64/10, B29C 64/112, G06K 19/06, B33Y 10/00, B33Y 50/00, B33Y 99/00, B33Y 30/00

(54) **THREE-DIMENSIONAL FABRICATED OBJECT MANUFACTURING APPARATUS AND MANUFACTURING METHOD**
VORRICHTUNG ZUR HERSTELLUNG EINES DREIDIMENSIONALEN GEFERTIGTEN OBJEKTS UND HERSTELLUNGSVERFAHREN
APPAREIL DE FABRICATION D'OBJETS EN TROIS DIMENSIONS ET PROCÉDÉ DE FABRICATION

(30) Priority: 14.04.2014 JP 2014082533
(43) Date of publication of application: 22.02.2017
(73) Proprietor: Konica Minolta, Inc., Tokyo 100-7015 (JP)
(72) Inventor: HAGA, Masayasu, Tokyo 100-7015 (JP); TABATA, Eiji, Tokyo 100-7015 (JP); NATSUHARA, Toshiya, Tokyo 100-7015 (JP); IZUMI, Tomoo, Tokyo 100-7015 (JP)
(74) Representative: Hoffmann Eitle
(86) International application number: PCT/JP2015/055799
(87) International publication number: WO 2015/159598

(56) References cited:
- WO-A1-2005/099635
- JP-A- H06 270 265
- JP-A- 2011 224 194
- JP-A- 2013 534 449
- US-B1- 6 976 627

## Description

### Technical Field

The present invention relates to a manufacturing apparatus and a manufacturing method for manufacturing a three-dimensional fabricated object (hereinafter, a 3D-modeled object) by an additive manufacturing process, in which layers of a modeling material are stacked one over another.

### Background Art

Today, 3D (three-dimensional) printers are commercially available from different manufacturers, and 3D modeling has been becoming more common. It is expected that, in the near future, there will be a shift from mass-manufacturing of standardized products to manufacturing of a wide variety of products in small quantities to satisfy consumers' preferences.

On the other hand, near-field wireless communication tags, such as NFC (near-field communication) tags and RFID (radio-frequency identification) tags, and near-field wireless communication functions, such as iBeacon, are increasingly in practical use in various applications including automatic recognition. For example, a near-field wireless communication tag can be affixed to, or previously embedded in, an object; it is then possible to automatically recognize the object by wireless communication with a terminal such as a smartphone.

Conventionally, a wireless communication tag can be incorporated in an object, for example, in one of the following manners. According to Patent Literature 1, a strip of adhesive tape, called wireless communication tag tape, in which a wireless communication tag is arranged on a base with an adhesive surface, is prepared. This tape is affixed to an appropriate place on an object so that the wireless communication tag is positioned on an external surface of the object.

According to Patent Literature 2 and Patent Literature 3, a wireless communication tag is embedded inside an object (resin) by injection molding. According to Patent Literature 4, a wireless communication tag is placed between two sheet-form molded members, which are then bonded together, thereby to manufacture a 3D-modeled object that incorporates a wireless communication tag.

In the case where a wireless communication tag is used, however, information needs to be stored in the tag in a fully encrypted manner; otherwise, the information may be unauthorizedly rewritten. Besides, wireless communication tags are prone to damage caused by mechanical power, electromagnetism, etc. Also, wireless communication at a predetermined distance requires a booster antenna, which may be unable to be accommodated inside an object together with a wireless communication tag, depending on a size of the object.

To deal with such a case, there has been proposed a technique of forming, in a 3D-modeled object, a structure corresponding to an information code (an identification code) instead of a wireless communication tag. For example, according to Patent Literature 5, a powder material is cured with two binders (a metal binder, a dielectric binder), which are different from each other in physical property, to form an electrically conductive region and a dielectric region, by using which an identification code for the 3D-modeled object is formed. According to Patent Literature 6, a 3D-modeled object is manufactured by using a build material and a contrast enhancing material, and an identification code for the 3D-modeled object is formed by using the contrast enhancing material.

According to Patent Literature 7, a marking is formed inside an object while the object is being manufactured by an additive manufacturing apparatus (additive manufacturing). The marking is produced by forming a porous substructure by melting/curing a powder or a liquid and changing parameters of an energy beam used to model a 3D-modeled object. A magnetic material is inserted in the porous substructure, or an unmelted/uncured powder or liquid is sealed inside the porous substructure.

Patent Literature 8 relates to a method and systems for producing three-dimensional objects. The method includes forming an identifiable structure within the three-dimensional object, wherein the identifiable structure within the three-dimensional object can be detected using non-invasive dimensional penetrating imaging devices or exploratory devices. The identifiable structure is fabricated so that it provides information, e.g. identifying, quantitative, and/or qualitative information, about the three-dimensional object. It is disposed within and/or upon the surface of the three-dimensional object to provide information that would otherwise be difficult or impossible to convey, determine, or detect without invasive action.

Nonpatent Literature 1 discloses a technique of embedding an information code inside an object during an additive manufacturing process. In Nonpatent Literature 2, it is reported that, when a three-dimensionally represented two-dimension code (for example, a QR code (registered trademark)) is embedded inside a modeled object, an X-ray CT scanner can perform nondestructive readout of the two-dimensional code.

### Citation List

### Patent Literature

Patent Literature 1: Japanese Utility Model Registration No. 3128557 (claim 1, paragraph [0014], Fig. 8, etc.)
Patent Literature 2: Japanese Patent Application Publication No. H08-276458 (claims 1 and 2, paragraphs [0013] - [0015], Figs. 1 and 4, etc.)
Patent Literature 3: Japanese Patent Application Publication No. H11-348073 (claims 1 and 6, paragraphs [0007] - [0008], Fig. 1, etc.)
Patent Literature 4: Japanese Patent Application Publication No. 2002-007989 (claim 6, paragraph [0044], Figs. 5(a) and 5(b), etc.)
Patent Literature 5: Japanese Patent Application Publication No. 2000-234104 (claims 1, 5, and 7, paragraph [0013], etc.)
Patent Literature 6: Japanese Translation of PCT International Application Publication No. JP-T-2007-536106 (claims 1, 2, paragraphs [0004], [0006] - [0013], [0019], etc.)
Patent Literature 7: Japanese Translation of PCT International Application Publication No. JP-T-2013-505855 (claims 1 - 9, paragraphs [0010] - [0030], etc.)
Patent Literature 8: WO 2005/099635 A1

Nonpatent Literature 1: Karl D. D. Willis, Andrew D. Wilson, "InfraStructs: Fabricating Information Inside Physical Objects for Imaging in the Terahertz Region", ACM Transactions on Graphics, Vol. 32, No. 4, Article 138, Publication Date: July 2013
Nonpatent Literature 2: IMAI Masataka, et al., "Detection for Matrix Barcode inside Fabricated Object via X-ray Computed Tomography (CT) Scanner", the Institute of Electronics, Information and Communication Engineers, Technical Report, vol. 113, No. 291, EMM 2013-87, pp. 113 - 118 , issued in November, 2013

### Summary of Invention

### Technical Problem

Inconveniently, however, in the case where a structure corresponding to an information code is embedded inside a 3D-modeled object as in Patent Literatures 5 to 7 and Non-patent Literatures 1 and 2, it is impossible to tell, by just externally viewing the 3D-modeled object, where in the 3D-modeled object the structure is embedded, and hence, in order to detect the structure, the 3D-modeled object needs to be scanned completely from end to end with an external device (such as an X-ray CT device). Thus, it is impossible to quickly read information from the structure. This problem becomes more evident in a larger 3D-modeled object.

The present invention has been made to solve the above problem, and an object thereof is to provide a manufacturing apparatus and a manufacturing method for manufacturing a 3D-modeled object that permit an external device to easily find a position of an information code embedded inside a 3D-modeled object, and thereby allow quick reading of the information code embedded inside the 3D-modeled object.

### Solution to Problem

The mentioned problems and drawbacks are addressed by the subject-matter of the independent claims. Further preferred embodiments are defined in the dependent claims. According to one aspect of the present invention, a manufacturing apparatus for manufacturing a 3D-modeled object includes a modeler configured to stack layers of a modeling material one over another, and the manufacturing apparatus is configured to manufacture a 3D-modeled object by additive manufacturing performed by the modeler. Here, the manufacturing apparatus includes an information code former configured to form, inside the 3D-modeled object modeled by the modeler, an information code obtained by encoding information for identifying the 3D-modeled object, and a position code former configured to form, inside or on a surface of the 3D-modeled object, a position code obtained by encoding information indicating a formation position of the information code inside the 3D-modeled object.

### Advantageous Effects of Invention

By detecting a position code provided inside or on a surface of a 3D-modeled object, an external device is able to easily find a position of an information code inside the 3D-modeled object based on the detected position code, and thus to read the information code quickly.

### Brief Description of the Drawings

[Fig. 1] is a block diagram showing an outline of a configuration of a 3D-modeled object manufacturing apparatus according to an embodiment of the present invention;
[Fig. 2] is a sectional view schematically showing part of the above-mentioned manufacturing apparatus;
[Fig. 3] is a perspective view showing an example of the above-mentioned 3D-modeled object;
[Fig. 4] is an illustrative diagram showing a perspective view, together with a plan view, a bottom view, a side view, a front view, and a rear view, each illustrating another example of the above-mentioned 3D-modeled object;
[Fig. 5] is a flow chart showing a process of manufacturing the above-mentioned 3D-modeled object;
[Fig. 6A] is a sectional view showing how a bottom layer of the above-mentioned 3D-modeled object is modeled in an additive manufacturing process;
[Fig. 6B] is a sectional view showing how an information code is formed inside the above-mentioned 3D-modeled object in the additive manufacturing process;
[Fig. 6C] is a sectional view showing how a layer above the information code and the position code is formed in the above-mentioned 3D-modeled object in the additive manufacturing process;
[Fig. 7] is a perspective view showing still another example of the above-mentioned 3D-modeled object;
[Fig. 8] is a flow chart showing a process of manufacturing a 3D-modeled object having a mark on a surface thereof; and
[Fig. 9] is a sectional view showing a still another example of the above-mentioned 3D-modeled object.

### Description of Embodiments

An embodiment of the present invention will be described below with reference to the accompanying drawings.

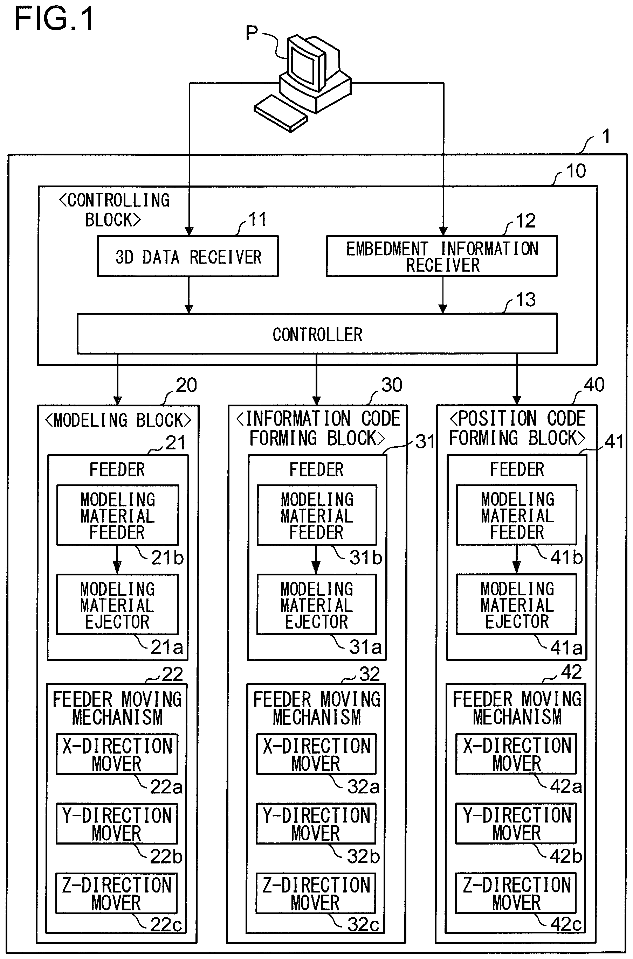

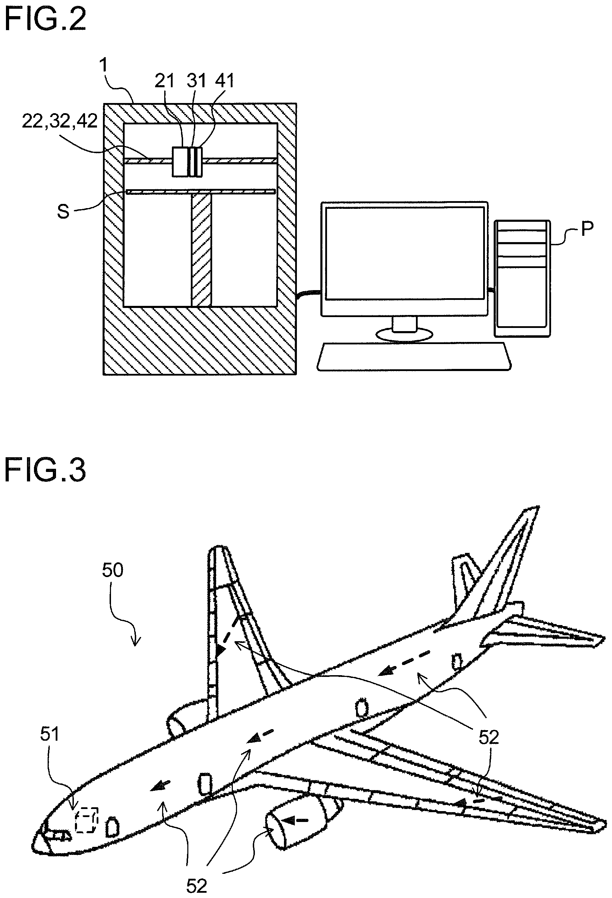

**3D-Modeled Object Manufacturing Apparatus:** Fig. 1 is a block diagram showing an outline of a configuration of a 3D-modeled object manufacturing apparatus 1 according to one embodiment of the present invention. Fig. 2 is a sectional view schematically showing part of the manufacturing apparatus 1. The manufacturing apparatus 1 is an apparatus that models a 3D-modeled object by an additive manufacturing process.

Examples of the above-mentioned additive manufacturing process include a fused deposition modeling (FDM) process, an ink-jet process, an ink-jet binder process, a stereo-lithography (SL) process, and a selective laser sintering (SLS) process. Any of these processes can be used to manufacture a 3D-modeled object according to the embodiment, though with varying suitability depending on a size and a type of the 3D-modeled object to be manufactured. The embodiment described below deals with an example where an ink-jet process is used as an additive manufacturing process.

The 3D-modeled object manufacturing apparatus 1 includes a controlling block 10, a modeling block 20, an information code forming block 30, and a position code forming block 40. The manufacturing apparatus 1 may further include, as necessary, a removing block (unillustrated) for removing excess modeling material, etc. Each block will now be described in detail.

**Controlling Block:** The controlling block 10 includes a 3D data receiver 11, an embedment information receiver 12, and a controller 13. The 3D data receiver 11 is an input receiver that receives three-dimensional shape data (3D data) of a modeling target (a 3D-modeled object). The 3D data receiver 11 may be configured (as an interface) so as to acquire 3D data of a 3D-modeled object from an external computer P or the like via a communication line, or may be configured as an operated device, such as a keyboard, that directly accepts entry of 3D data of a 3D-modeled object. 3D data received by the 3D data receiver 11 is transferred to the controller 13.

The embedment information receiver 12 is an input receiver that receives information (embedment information) to be embedded in a 3D-modeled object. The embedment information may be information that helps identify a 3D-modeled object, such as a serial number, a manufacture date, a manufacture place, etc., of the 3D-modeled object. The embedment information receiver 12 may be configured (as an interface) so as to acquire embedment information from an external computer P or the like via a communication line, or may be configured as an operated device, such as a keyboard, that directly accepts entry of embedment information. Embedment information received by the embedment information receiver 12 is transferred to the controller 13.

The controller 13 includes a data processor such as a central processing unit (CPU). Based on 3D data transferred from the 3D data receiver 11, the controller 13 creates (constructs) layer-by-layer data for three-dimensional modeling of a modelling material. The controller 13 also merges modeling data of a 3D-modeled object with data of an information code, a position code, and a mark, which will be described later, to create merged data, from which the controller 13 creates (reconstructs) layer-by-layer data.

Also, the controller 13 encodes embedment information received by the embedment information receiver 12 to create an information code, and, based on the 3D data of the 3D-modeled object and shape data of the information code, the controller 13 calculates such an arrangement position of the information code where the information code fits inside the 3D-modeled object. Further, the controller 13 creates a position code by encoding information indicating a formation position of the information code inside the 3D-modeled object, and calculates an arrangement position of the position code inside the 3D-modeled object.

Also, the controller 13 controls operation of the entire apparatus including the modeling block 20, the information code forming block 30, and the position code forming block 40.

The 3D data receiver 11, the embedment information receiver 12, and the controller 13 may be implemented as hardware that operates as described above, or may be implemented as control programs that, when run, function as a 3D data receiver, an embedment information receiver, and a controller.

**Modeling Block:** The modeling block 20 is a modeler that models a 3D-modeled object by stacking layers of a modeling material (a first modeling material) one over another. The modeling block 20 includes a feeder 21 for feeding the modeling material (for example, ink) to a predetermined position, and a feeder moving mechanism 22 that moves the feeder 21 so that the modeling material can be fed to the target position.

The feeder 21 includes a modeling material ejector 21a and a modeling material feeder 21b. According to slice data (layer-by-layer data) acquired from the controlling block 10, the modeling material ejector 21a ejects the modeling material onto a modeling stage S, to a position determined by the feeder moving mechanism 22, with desired timing. In a case where ink is used as the modeling material, the modeling material ejector 21a is configured as an ink-jet head (an ink ejector) that ejects ink. The ink ejected onto the modeling stage S is cured by ultraviolet radiation from an unillustrated light source. The modeling material feeder 21b feeds the modeling material, which is stored in an unillustrated reservoir, to the modeling material ejector 21a. In a case where ink is used as the modeling material, the modeling material feeder 21b is configured as a tube (an ink feeder) through which the ink is fed to the ink-jet head.

The feeder moving mechanism 22 includes an X-direction mover 22a, a Y-direction mover 22b, and a Z-direction mover 22c. Based on movement control information acquired from the controlling block 10, the X-, Y-, and Z-direction movers 22a, 22b, and 22c drive an unillustrated driving mechanism, to move the feeder 21 in different directions three-dimensionally, specifically in X, Y, and Z directions, which are perpendicular to each other.

The manufacturing apparatus 1 may include one modeling material ejector 21a and one modeling material feeder 21b, or may include a plurality of each.

The above-described configuration of the modeling block 20 is one for a case where an ink-jet process is used as an additive manufacturing process, and allows for appropriate modifications depending on the type of the additive manufacturing process used. For example, in a case where stereo-lithography is used as an additive manufacturing process, the modeling block 20 can be configured to include a container in which to accommodate an ultraviolet-curing resin as a modeling material, a light source for irradiating the ultraviolet-curing resin placed on a base plate with ultraviolet light, an elevating mechanism that lowers the base plate each time the curing of a layer (a topmost layer) by irradiation with ultraviolet light is completed, etc. In any case (no matter which additive manufacturing process is used), the modeling block 20 can be configured to model a 3D-modeled object by stacking layers of the modeling material one over another.

**Information Code Forming Block:** The information code forming block 30 is a block (an information code former) that forms, inside a 3D-modeled object modeled by the modeling block 20, an information code obtained by encoding information (embedment information) for identifying the 3D-modeled object. For example, the embedment information is encoded into the information code through predetermined processing performed by the controller 13, and the thereby obtained information code is to be formed as a structure inside the 3D-modeled object.

The information code forming block 30 has a same configuration as the above-described modeling block 20. Specifically, the information code forming block 30 includes a feeder 31 for feeding a second modeling material (for example, ink) for forming the information code to a predetermined position, and a feeder moving mechanism 32 that moves the feeder 31 so that the second modeling material can be fed to a target position.

The feeder 31 includes a modeling material ejector 31a and a modeling material feeder 31b. Under control by the controlling block 10, the modeling material ejector 31a ejects the second modeling material onto the modeling stage S, to a position determined by the feeder moving mechanism 32, with desired timing. The modeling material feeder 31b feeds the second modeling material, which is stored in an unillustrated reservoir, to the modeling material ejector 31a.

The feeder moving mechanism 32 includes an X-direction mover 32a, a Y-direction mover 32b, and a Z-direction mover 32c. Based on movement control information acquired from the controlling block 10, the X-, Y-, and Z-direction movers 32a, 32b, and 32c drive an unillustrated driving mechanism, to move the feeder 31 in different directions three-dimensionally, specifically in the X, Y, and Z directions, which are perpendicular to each other.

Here, the first modeling material used for modeling the 3D-modeled object and the second modeling material used for modeling the information code are different from each other. For example, in a case where a resin ink (for example, an acrylate photocurable ink) is used as the first modeling material, a metallic ink (for example, one obtained by dispersing a powdered metal in a photocurable ink) is used as the second modeling material. These inks are cured by UV radiation, and based on difference between these inks in physical property (for example, density), an external device is able to distinguish the information code from the 3D-modeled object outside the information code, and read the information code.

Here, examples of the external device for reading the information code include an X-ray CT device, an ultrasonic CT device, a terahertz imaging device, a magnetic resonance imaging device, etc., but any device may be used as long as it is capable of performing non-destructive imaging of an inside of a 3D-modeled object.

Also, the first modeling material and the second modeling material may be a same material (for example, both may be a resin ink). In this case, the modeling block 20 cures the first modeling material, and the information code forming block 30 does not cure the second modeling material but leaves it uncured, whereby the information code is formed inside the 3D-modeled object. It is possible to make the first and second modeling materials different from each other in physical property (for example, density) by curing the first modeling material and leaving the second modeling material uncured, and thus, in this case, too, it is possible for the external device to distinguish the information code from the 3D-modeled object outside the information code, and read exactly the information code.

In the case where the first and second modeling materials are the same material, by providing a gap of a predetermined width around the information code formed of the second material inside a 3D-modeled object, too, it is possible to make distinction between the information code and the 3D-modeled object outside the information code, and thus to allow the external device to read the information code. In this case, however, some part of the structure constituting the information code needs to be supported inside the 3D-modeled object.

The above-described modeling block 20 may serve also as the information code forming block 30. Specifically, the modeling block 20 may be configured to eject the first modeling material and the second modeling material. In this case, the manufacturing apparatus 1 can be built compact. In particular, in the case where the first modeling material and the second modeling material are the same material, just one modeling material ejector and one modeling material feeder need to be provided corresponding to the one kind of material to be ejected, and thus it is possible to simplify the configuration of the manufacturing apparatus 1.

**Position Code Forming Block:** The position code forming block 40 is a block (a position code former) that forms the position code obtained by encoding information indicating the formation position of the information code inside the 3D-modeled object (information for the external device to find (detect) the position of the information code) inside or on a surface of the 3D-modeled object modeled by the modeling block 20. An example of forming the position code will be described later.

The position code forming block 40 has a same configuration as the above-described modeling block 20 and the information code forming block 30. Specifically, the position code forming block 40 includes a feeder 41 for feeding a third modeling material (for example, ink) for forming the position code to a predetermined position and a feeder moving mechanism 42 that moves the feeder 41 so that the third modeling material can be fed to the target position.

The feeder 41 includes a modeling material ejector 41a and a modeling material feeder 41b. Under control by the controlling block 10, the modeling material ejector 41a ejects the third modeling material onto the modeling stage S, to a position determined by the feeder moving mechanism 42, with desired timing. The modeling material feeder 41b feeds the third modeling material, which is stored in an unillustrated reservoir, to the modeling material ejector 41a.

The feeder moving mechanism 42 includes an X-direction mover 42a, a Y-direction mover 42b, and a Z-direction mover 42c. Based on movement control information acquired from the controlling block 10, the X-, Y-, and Z-direction movers 42a, 42b, and 42c drive an unillustrated driving mechanism, to move the feeder 41 in different directions three-dimensionally, specifically in the X, Y, and Z directions, which are perpendicular to each other.

Here, the first modeling material used for modeling the 3D-modeled object and the third modeling material used for modeling the position code are different from each other. For example, in a case where a resin ink is used as the first modeling material, a metallic ink is used as the third modeling material. These inks are cured by UV radiation, and based on difference between these inks in physical property (for example, density), the external device is able to distinguish the position code from the 3D-modeled object outside the position code, and detect the position code. Here, the second modeling material used for modeling the information code and the third modeling material used for modeling the position code may be either the same or different from each other.

Here, as the external device for detecting the position code, the same device that is used for reading the information code, such as an X-ray CT device described above, may be used.

Also, the first modeling material and the third modeling material may be the same (for example, both may be the same resin ink). In this case, the modeling block 20 cures the first modeling material, and the position code forming block 40 does not cure the third modeling material but leaves it uncured, whereby the position code is formed inside the 3D-modeled object. It is possible to make the first and third modeling materials different from each other in physical property (for example, density) by curing the first modeling material and leaving the third modeling material uncured, and thus, in this case, too, it is possible for the external device to distinguish the position code from the 3D-modeled object outside the position code, and read the position code.

Further, in the case where the first and third modeling materials are the same, by providing a gap having a predetermined width around the position code formed by using the third material inside the 3D-modeled object, it is also possible to make distinction between the position code and the 3D-modeled object outside the position code, and thus to allow the external device to read the information code. Here, however, some part of the structure formed as the position code needs to be supported inside the 3D-modeled object.

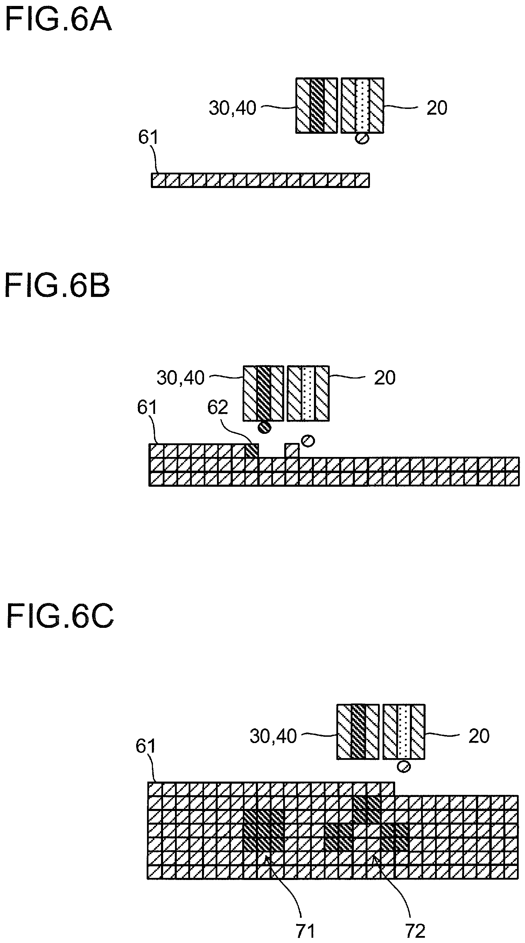

The above-described modeling block 20 may serve also as the position code forming block 40. Specifically, the modeling block 20 may be configured to eject the first modeling material and the third modeling material. In this case, the manufacturing apparatus 1 can be built compact. In particular, in the case where the first modeling material and the third modeling material are the same material, just one modeling material ejector and one modeling material feeder need to be provided corresponding to the one kind of material to be ejected, and thus it is possible to simplify the configuration of the manufacturing apparatus 1. Also, in a case where the first, second, and third modeling materials are all the same material, the modeling block 20 can serve also as both the information code forming block 30 and the position code forming block 40, and this helps achieve a maximum possible effect in terms of simplifying the configuration of the manufacturing apparatus 1. Here, it may be the information code forming block 30 alone that serves also as the position code forming block 40 (see Figs. 6A to 6C).

**Example of Position Code Formation:** Fig. 3 is a perspective view showing an example of a 3D-modeled object 50 manufactured by the manufacturing apparatus 1. Here, the 3D-modeled object 50 is a model airplane as an example. An information code 51 for identifying the 3D-modeled object 50 is disposed inside an airplane nose (inside a front part of the model airplane) of the 3D-modeled object 50. A position code 52, which is disposed at each of a plurality of positions inside the 3D-modeled object 50, is formed as an arrow-shaped structure. A direction in which an arrow of the position code 52 points corresponds to an arrangement direction of the information code 51 as seen from an arrangement position of the position code 52, and a length of the arrow corresponds to a distance between the position code 52 and the information code 51. That is, a longer arrow of the position code 52 indicates a longer distance between the position code 52 and the information code 51. Thus, the closer the position code 52 is to the information code 51, the shorter the arrow is formed.

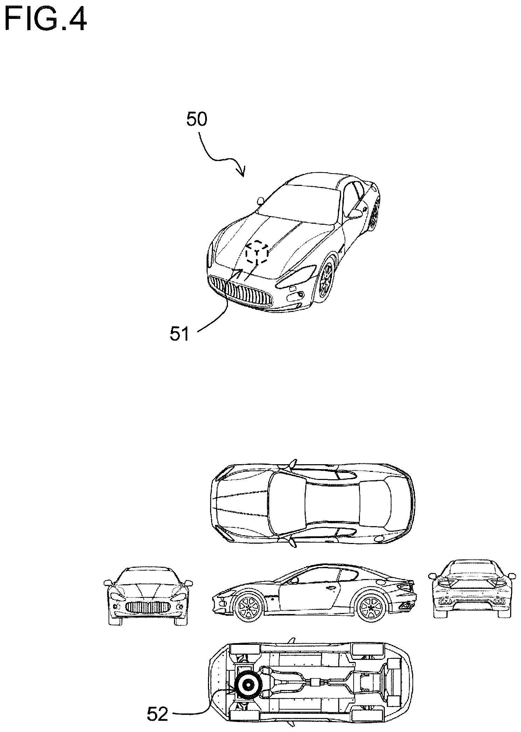

Fig. 4 is a diagram showing a perspective view, together with a plan view, a bottom view, a side view, a front view, and a rear view, each illustrating another example of the 3D-modeled object 50. Here, the 3-D modeled object 50 is a model automobile as an example. The information code 51 for identifying the 3-D modeled object 50 is disposed inside the 3-D modeled object 50, at a position below a bonnet, which is disposed in a front part of the automobile. The position code 52 is disposed on a surface of the 3-D modeled object 50 right below the information code 51, specifically, on a surface of a bottom chassis of the automobile, and the position code 52 is formed as a structure representing a double circle in plan view. The position code 52 indicates an arrangement position of the information code 51 in the 3-D modeled object 50 (indicates that the information code 51 is arranged right above the position code 52).

Thus, the position code 52 formed inside or on the surface of the 3-D modeled object 50 has any one piece of information, or any two pieces of information, selected from among the arrangement position of the information code 51 in the 3-D modeled object 50, the arrangement direction of the information code 51 as seen from the position of the position code 52, and the distance between the position code 52 and the information code 51. The position code 52 may have any combination of the three pieces of information, and may be formed to have all of the three pieces of information.

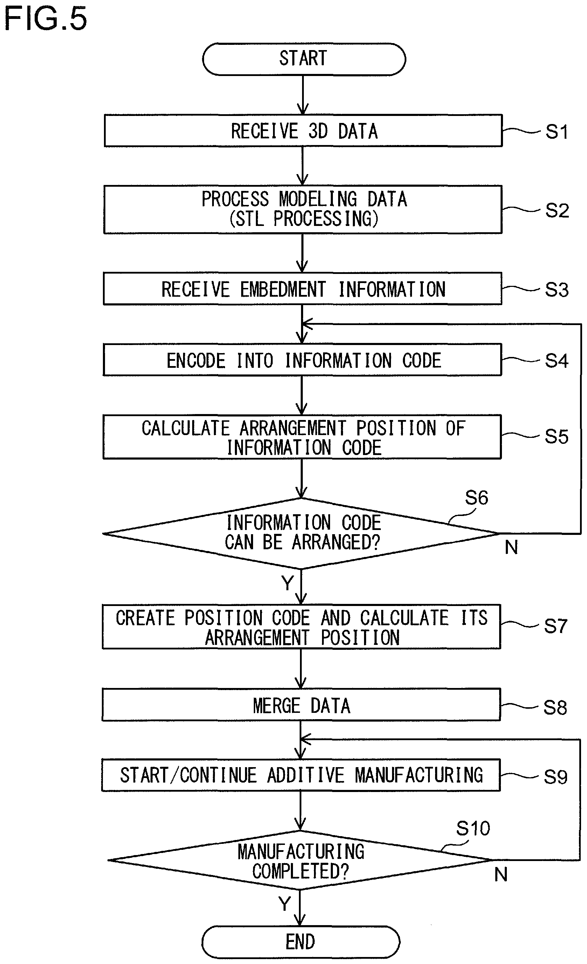

**3D-Modeled Object Manufacturing Method:** Next, a description will be given of a 3D-modeled object manufacturing method that employs the manufacturing apparatus 1 described above. Fig. 5 is a flow chart showing a process of manufacturing a 3D-modeled object. In Fig. 5, the individual steps, which will be referred to as Steps 1, 2, ... below, are identified as S1, S2, ....
**Step 1:** 3D data of a 3D-modeled object as a modeling target is transferred from a computer P or the like to the 3D data receiver 11.
**Step 2:** Based on the 3D data received at Step 1, the controller 13 creates (two-dimensional) layer-by-layer data for three-dimensional modeling of the 3D-modeled object by using a modelling material. This processing is referred to as modeling data processing, or standard triangulated language (STL) processing.
**Step 3:** As a target of the encoding into an information code, embedment information (including a serial number, a manufacture date, etc.) for identifying the 3D-modeled object is transferred from the computer P or the like to the embedment information receiver 12.
**Step 4:** The controller 13 encodes, through a predetermined operation, the embedment information received by the embedment information receiver 12, to thereby generate data of the information code.
**Step 5:** In order to embed the generated information code inside the 3D-modeled object, based on information regarding a shape of the information code, the controller 13 calculates (determines) such an arrangement position of the information code where the information code is to be arranged inside the 3D-modeled object. Thereafter, the layer-by-layer data generated at Step 2 is merged with the data of the information code, but this process may be omitted (that is, the layer-by-layer data may be merged with the information code together with a position code at later-described Step 8).
**Step 6:** The controller 13 judges, from the arrangement position of the information code determined at Step 5, whether or not the information code is able to be arranged inside the 3D-modeled object. When judging affirmatively, the controller 13 proceeds directly to Step 7, while when judging negatively, the controller 13 returns to Step 4, where the controller 13 changes a size of the information code by, for example, changing an information amount or changing an information compression ratio, and then in Step 5, the controller 13 recalculates the arrangement position of the information code. The controller 13 repeats the above process until it judges that the information code can be arranged inside the 3D-modeled object. Here, the above-described changing of the information amount includes partial cutting of information included in the embedment information (for example, reducing the information amount so that only the serial number is included in the information code), for example.
**Step 7:** Based on the information of the arrangement position of the information code calculated at Step 5, the controller 13 creates a position code by encoding information indicating a formation position of the information code in the 3D-modeled object, and calculates (determines) an arrangement position of the position code inside or on a surface of the 3D-modeled object. Here, in a case of setting the position code to include the information of the arrangement position of the information code (for example, coordinates of the information code in an XYZ orthogonal coordinate system), the controller 13 may determine the arrangement position of the position code after creating the position code. However, in a case where the position code is set to include the information of the arrangement direction of the information code and the information of the distance between the position code and the information code, the arrangement position of the position code needs to be determined first in order to determine the arrangement direction of the information code as seen from the arrangement position of the position code and the distance between the arrangement position and the information code, and thus, the controller 13 needs to determine the arrangement position of the position code first.
**Step 8:** The controller 13, merges the modeling data for modeling the 3D-modeled object three-dimensionally, which has been acquired at Step 2, with the information code such that the information code is arranged at the arrangement position determined at Step 5, and merges the modeling data for modeling the 3D-modeled object three-dimensionally with the position code such that the position code is arranged at the arrangement position determined at Step 7, and creates (reconstructs) the layer-by-later data for modeling the 3D-modeled object.
**Steps 9 and 10:** The modeling block 20 starts to model the 3D-modeled object based on the layer-by-layer data (slice data) that the controller 13 has created (S9). Then, as illustrated in Figs. 6A - 6C, the modeling block 20 manufactures the 3D-modeled object by stacking layers of a modeling material 61 as a first modeling material one over another (additive manufacturing process). Further, in this additive manufacturing process, in parallel with the modeling of the 3D-modeled object performed by the modeling block 20, the information code forming block 30 and the position code forming block 40 eject a modeling material 62 as a second modeling material and as a third modeling material based on the above-mentioned slice data, and forms an information code 71 and a position code 72 inside (or on a surface of) the 3D-modeled object by modeling (see Fig. 6B, Fig. 6C). The modeling material 61 is a resin ink, and the modeling material 62 is a metallic ink. The information code forming block 30 serves also as the position code forming block 40.

Here, the modeling material 62 used to model the information code 71 and the position code 72 is different from the modeling material 61 used to model the 3D-modeled object, but instead, as mentioned already, these modeling materials may be the same (that is, for example, distinction between the information and position codes 71 and 72 and the 3D-modeled object may be made based on whether they are cured or uncured). Accordingly, in the additive manufacturing process, the 3D-modeled object is modeled based on the merged data acquired at Step 8, by using at least one kind of modeling material. When modeling of all the layers of the 3D-modeled object is completed (S10), the operation of manufacturing the 3D-modeled object performed by the manufacturing apparatus is completed.

Also, in the additive manufacturing process, in order to embed the information code 71 inside the 3D-modeled object, the information code is formed of the modeling material 62 in at least one layer arranged interior to outermost ones (topmost and bottommost layers) of the stacked layers of the modeling material 61. Further, in order to form the position code 72 inside or on the surface of the 3D-modeled object, the position code 72 is formed of the modeling material 62 in at least one of the stacked layers of the modeling material 61.

As has been described above, inside or on the surface of the 3D-modeled object, there is formed a position code (for example, the position code 52 or 72) that indicates the formation position of an information code (for example, the information code 51 or 71). This allows the external device to easily find the position of the information code inside the 3D-modeled object by detecting the position code. As a result, it becomes possible for the external device to read the information code without scanning the 3D-modeled object entirely from end to end, and thus to read the information code quickly. That is, with the manufacturing apparatus 1 of the present embodiment, the position code formation makes it possible to manufacture a 3D-modeled object that allows the external device to easily and quickly read an information code embedded inside the 3D-modeled object.

In the existing multifunction peripheral (MFP) business or printer business, along with the improvement in printing quality, there has arisen a social demand for a technique to prevent unauthorized printing of bank notes and the like, and also a technique to track down unauthorized copies, and these techniques have already been applied to image forming apparatuses. In the field of 3D printers, too, it is expected that a higher modeling quality will give rise to a social demand for a technique to prevent unauthorized modeling, and also a technique to track down unauthorizedly modeled objects. The capability to quickly read a structure (an information code) embedded inside a 3D-modeled object can be regarded as very advantageous in that it allows a quick performance of a next step (for example, judging whether or not the 3D-modeled object has been unauthorizedly modeled, tracking down of an unauthorizedly modeled object, etc.) based on the thus read information code.

Further, the position code formed by the position code forming block 40 includes information of at least one of the arrangement position of the information code, the arrangement direction of the information code, and the distance between the position code and the information code, and thus, by detecting the position code, the external device can accurately find the arrangement position of the information code from the position code.

Further, by modeling a 3D-modeled object with at least one kind of modeling material based on merged data obtained by merging modeling data with an information code and a position code, it is possible to securely model a 3D-modeled object having an information code and a position code formed inside thereof or on the surface thereof.

Further, in the present embodiment, a 3D-modeled object is modeled by using ink as a modeling material. Thus, the above-described effects can be obtained in a case where a 3D-modeled object is manufactured by an ink-jet process in particular out of different additive manufacturing processes.

**Formation of Mark:** The position code former 40 described above may serve also as a mark former. The mark former forms a mark by modeling on a surface of a 3D-modeled object, at a position near a position code. The mark indicates that a position code exists in the vicinity thereof. Here, a position code existing in the vicinity of the mark means that the distance between the position code and the mark is shorter than the distance between any other position code and the mark, and is also shorter than the distance between the information code and the mark. Here, the mark may have any shape as long as it is visible; it may be uneven shaped, or it may be colored.

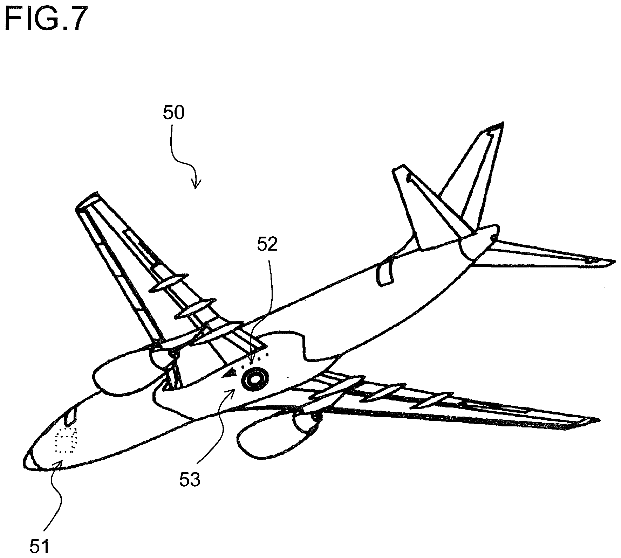

Fig. 7 is a perspective view of still another example of the 3D-modeled object 50, as seen from below. On the surface of the 3D-modeled object 50, at a position near a position code 52, there is arranged a mark 53 formed by the position code former 40 (the mark former). In the example of Fig. 7, the mark 53 is formed as a double-circle symbol, but it may be formed otherwise (for example, as a rectangle, triangle, white circle, or black circle symbol, etc.). In addition to these, the mark 53 may be formed as one selected from the following: a letter (hiragana, katakana, alphabets, etc.), a numeral (an Arabic numeral, a Roman numeral, a Chinese numeral, etc.), a symbol (+, -, etc.), a seal, an emblem, a crest, a logo (a letter created by combining two or more letters), a signature, a diagram (graphically described design, plan, or the like, ornamental picture, motif, design, or the like), a characteristic shape, a pattern, and a combination of any of these.

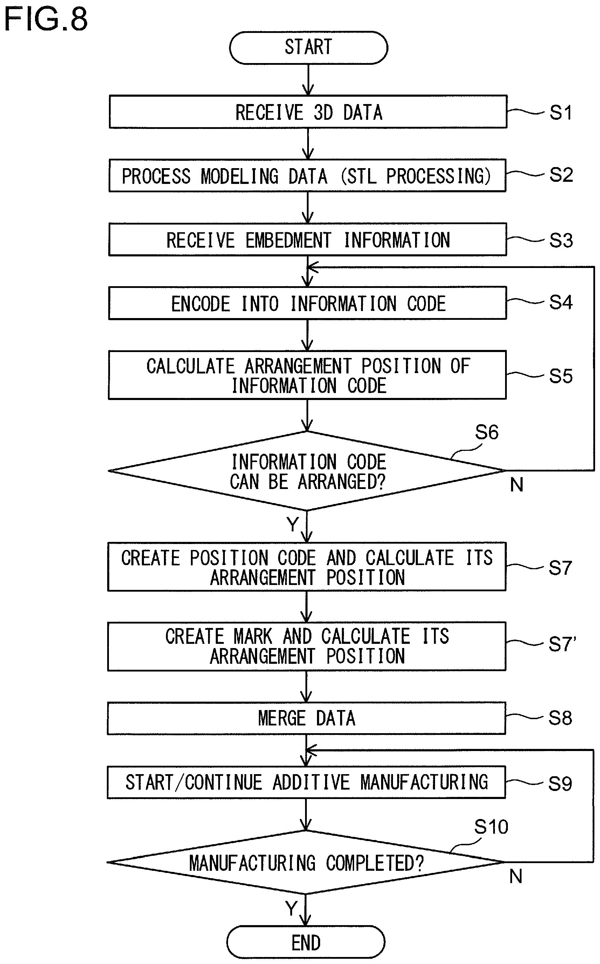

Fig. 8 is a flow chart showing a process of manufacturing a 3D-modeled object having a mark on its surface. The flow chart of Fig. 8 is the same as that of Fig. 5, except that Fig. 8 has Step 7' between Step 7 and Step 8. Hereinafter, a description will be given of operations performed at and after Step 7'.

At Step 7', the controller 13 creates a mark (data) that serves as a guide to the position code created at Step 7, and calculates an arrangement position of the mark (a position that is on the surface of the 3D-modeled object and in the vicinity of the position code). Here, the mark may be created based on an input (specification on the shape of the mark) received via an unillustrated input receiver. Also, the arrangement position of the mark may be calculated based on an input (specification on the arrangement position) received via an unillustrated input receiver.

Then, at Step 8, the controller 13 merges the modeling data obtained at Step 2 with the information code and the position code, and also with the data of the mark such that the mark is arranged at the arrangement position determined at Step 7', to thereby create merged data, and creates (reconstructs) the layer-by-layer data to be used to model the 3D-modeled object. Thereafter, based on the layer-by-layer data (slice data) created by the controller 13, in the additive manufacturing process performed at Steps 9 and 10, the modeling block 20, the information code forming block 30, and the position code forming block 40 model the 3D-modeled object, the information code, and the position code, and the position code forming block 40, which serves also as the mark former, models the mark.

Thus, with the mark formed on the surface of the 3D-modeled object, at a position in the vicinity of the position code, the external device is allowed to quickly detect the position code by scanning only the vicinity of the mark, and thus to easily find the position of the information code from the detected position code and quickly read the information code.

Also, when formed as any of the above listed signs, etc., the mark has a noticeable appearance, clearly showing where the external device should scan for the position code, and this makes it possible for the external device to detect the position code quickly.

Also, since the position code forming block 40 serves also as the mark former, the manufacturing apparatus 1 can be built compact. Here, it is also possible to provide the mark former as a device independent of the position code forming block 40. In this case, when given the same configuration (for example, a feeder and a feeder moving mechanism) as the position code former 40, the mark former can form (model) the mark by using a modeling material.

Also, by modeling a 3D-modeled object based on the merged data obtained by merging the modeling data, the information code, the position code, and the data of the mark together, it is possible to securely manufacture a 3D-modeled object having an information code, a position code, and a mark formed inside thereof or on the surface thereof. Here, the modeling materials used to model the 3D-modeled object, the information code, the position code, and the mark may all be the same, or may be different from each other. Thus, by using at least one kind of modeling material, it is possible to securely manufacture a 3D-modeled object having an information code, a position code, and a mark formed inside thereof or on the surface thereof.

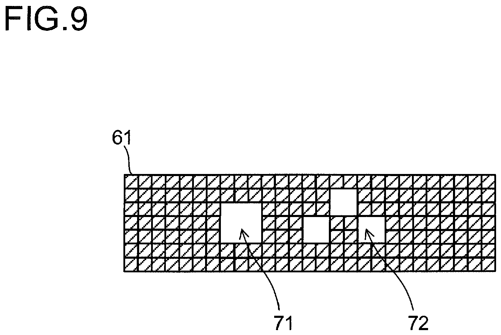

**Other Modeling Methods:** Fig. 9 is a sectional view showing still another example of the 3D-modeled object, including another example of the information code 71 and the position code 72 embedded inside the 3D-modeled object. The modeling block 20 serves also as the position code forming block 40, and the modeling block 20 may be configured to form the position code 72 by stacking the modeling material 61 excluding a part to be the position code 72 in the above-described additive manufacturing process. The modeling block 20 serves also as the information code forming block 30, and the modeling block 20 may be configured to form the information code 71 by stacking the modeling material 61 excluding a part to be the information code 71 in the above-described additive manufacturing process.

For example, in a case where the modeling block 20 models a 3D-modeled object by a fused deposition modeling (FDM) process, the modeling is performed by melting a thread-like resin (filament) with heat, and extruding the melted resin from a dissolution head to stack it on a platform. As the resin, there can be used a resin higher in viscosity than ink used in an ink-jet process, such as an ABS resin (acrylonitrile-butadiene-styrene copolymerization synthetic resin). Thus, by performing the additive manufacturing process by using such a highly viscous resin, it becomes possible to model a 3D-modeled object while forming spaces to be an information code 71 and a position code 72 inside the 3D-modeled object. Of the above-mentioned spaces, one that forms the information code 71 is a closed space (this is because the information code 71 is formed inside the 3D-modeled object), but one that forms the position code 72 may be either a closed space or an open space (this is because the position code 72 is formed inside or on the surface of the 3D-modeled object).

Since the spaces surrounded by the modeling material 61 become the information code 71 and the position code 72, there is no need of preparing a modeling material for forming an information code and a position code besides the modeling material 61 used for modeling the 3D-modeled object. Further, since there is no need of providing an ejector that ejects a modeling material for forming an information code and a position code, it becomes possible to omit the information code forming block 30 and the position code forming block 40, and thus to simplify the configuration of the manufacturing apparatus 1.

The above-described 3D-modeled object manufacturing apparatus and method for manufacturing a 3D-modeled object can be expressed as follows, and provide effects as described below.

The above-described 3D-modeled object manufacturing apparatus includes a modeler that stacks layers of modeling material one over another, and manufactures a 3D-modeled object by an additive manufacturing process performed by the modeler. The manufacturing apparatus includes an information code former that forms, inside the 3D-modeled object modeled by the modeler, an information code obtained by encoding information for identifying the 3D-modeled object, and a position code former that forms, inside or on a surface of the 3D-modeled object, a position code obtained by encoding information indicating a formation position of the information code inside the 3D-modeled object.

With this configuration, the information code for identifying the 3D-modeled object is formed (embedded), by the information code former, inside the 3D-modeled object that is modeled by the modeler. And, the position code, which is obtained by encoding information indicating the formation position of the information code inside the 3D-modeled object, is formed, by the position code former, inside or on a surface of this 3D-modeled object. This makes it possible for an external device (for example, an X-ray CT device) to detect the position code to thereby easily find a position of the information code inside the 3D-modeled object based on the position code. Accordingly, the external device does not need to scan the entire 3D-modeled object in order to read the information code, and thus can read the information code quickly.

According to another aspect of the present invention, a method for manufacturing a 3D-modeled object includes an additive manufacturing process of manufacturing a 3D-modeled object by stacking layers of a modeling material one over another. In the additive manufacturing process, an information code obtained by encoding information for identifying the 3D-modeled object is formed in at least one layer arranged interior to outermost ones of the stacked layers of the modeling material, to thereby form the information code inside the 3-D modeled object, and a position code obtained by encoding information indicating a formation position of the information code is formed in at least one of the stacked layers of the modeling material to thereby form the position code inside or on a surface of the 3D-modeled object.

In the additive manufacturing process, an information code is formed inside a 3D-modeled object, and a position code is formed inside or on a surface of a 3D-modeled object. Thus, in the same manner as described above, by detecting the position code, an external device is able to easily find the position of the information code inside the 3D-modeled object based on the detected position code, and thus to read the information code more quickly than in the case of scanning the entire 3D-modeled object.

The position code former forms the position code, by using a modeling material, inside or on the surface of the 3D-modeled object, and the modeling material for modeling the 3D-modeled object and the modeling material for modeling the position code may be different. Also, in the additive manufacturing process, the position code may be formed inside or on the surface of the 3D-modeled object by using a modeling material that is different from the modeling material used for modeling the 3D-modeled object.

The 3D-modeled object and the position code are formed of different modeling materials, and thus are different from each other in physical property (for example, density). This makes it possible to make a clear distinction between the 3D-modeled object and the position code formed inside or on the surface of the 3D-modeled object, and thus to allow secure detection of the position code by the external device.

The position code former may form the position code inside the 3D-modeled object by using a modeling material, the modeling material may be the same as the modeling material that is used for modeling the 3D-modeled material, and the position code may be formed inside the 3D-modeled object by making the modeling material used to model the 3D-modeled object different in physical property from the modeling material used to model the position code.

Also, in the additive manufacturing process, the position code may be formed inside the 3D-modeled object with the same modeling material as the one used for modeling the 3D-modeled object by making the modeling material used to model the 3D-modeled object different in physical property from the modeling material used to model the position code.

Even when the modeling material used to model a 3D-modeled object is the same as the modeling material used to model a position code, a position code is formed inside a 3D-modeled object by making them different from each other in physical property (for example, density) by, for example, curing the former and leaving the latter uncured. In this case, too, it is possible to make a clear distinction between the 3D-modeled object and the position code formed inside thereof, and thus for the external device to securely detect the position code.

The modeler may serve also as at least either of the information code former and the position code former. In this case, the manufacturing apparatus can be built compact.

The information code former may serve also as the position code former. In this case, the manufacturing apparatus can be built more compact than in a case where they are configured separately.

It is preferable for the position code to include information of at least one of an arrangement position of the information code in the 3D-modeled object, an arrangement direction of the information code as seen from a position of the position code, and a distance between the position code and the information code.

In this case, by detecting a position code, the external device can accurately find, based on the position code, the arrangement position (embedment position) of the information code in the entire 3D-modeled object.

The manufacturing apparatus described above may further include a mark former that forms a mark on the surface of the 3D-modeled object, at a position in the vicinity of the position code, the mark indicating that the position code exists in the vicinity thereof. Also, in the additive manufacturing process, there may be further formed a mark on the surface of the 3D-modeled object, at a position in the vicinity of the position code, the mark indicating that the position code exists in the vicinity thereof.

In this case, by scanning the vicinity of the mark, the external device can detect the position code quickly.

The position code former may serve also as the mark former. In this case, the manufacturing apparatus can be built compact.

The mark may be formed as any one of the following: a letter, a numeral, a symbol, a sign, a seal, an emblem, a crest, a logo, a signature, a diagram, a characteristic shape, a pattern, and a combination of any of these. In this case, since the mark has a noticeable appearance, it is possible to have the external device scan only the vicinity of the mark to detect the position code.

The manufacturing method described above may further include a process of encoding information for identifying the 3D-modeled object into the information code, a process of determining an arrangement position of the information code inside the 3D-modeled object based on information of a shape of the information code, a process of encoding information indicating a formation position of the information code in the 3D-modeled object into the position code and determining an arrangement position of the position code inside or on a surface of the 3D-modeled object, and a process of creating merged data by merging modeling data for modeling the 3D-modeled object three-dimensionally with the information code and the position code such that the information code and the position code are arranged at their determined arrangement positions, and in the additive manufacturing process, the 3D-modeled object may be modeled based on the merged data by using at least one kind of modeled material.

By forming the 3D-modeled object based on the merged data obtained by merging the modeling data with the information code and the position code by using at least one kind of modeling material, it is possible to securely model the 3D-modeled object having the information code and the position code, the information code and the position code being formed inside or on the surface the 3D-modeled object.

The manufacturing method described above may further include a process of encoding information for identifying the 3D-modeled object into the information code, a process of determining an arrangement position of the information code inside the 3D-modeled object based on information of a shape of the information code, a process of encoding information indicating a formation position of the information code in the 3D-modeled object into the position code and determining an arrangement position of the position code inside or on a surface of the 3D-modeled object, a process of creating data of the mark, and determining an arrangement position of the mark on the surface of the 3D-modeled object, and a process of creating merged data by merging modeling data for modeling the 3D-modeled object three-dimensionally with the information code, the position code, and the data of the mark such that the information code, the position code, and the mark are arranged at their determined arrangement positions, and in the additive manufacturing process, the 3D-modeled object may be modeled based on the merged data by using at least one kind of modeling material.

By modeling the 3D-modeled object based on the merged data obtained by merging the modeling data, the information code, the position code, and data of the mark together by using at least one kind of modeling material, it is possible to securely manufacture the 3D-modeled object having the information code, the position code, and the mark formed inside thereof or on the surface thereof.

The manufacturing method described above may further include a process of receiving information for identifying the 3D-modeled object as a target of the encoding into the information code. In this case, an information code can be obtained by encoding the received information (identification information).

The modeler may include an ink ejector that ejects ink as the modeling material, and an ink feeder that feeds the ink into the ink ejector. Also, in the additive manufacturing process, the 3D-modeled object may be modeled by using ink as the modeling material.

In this case, it is possible to obtain the above-mentioned effects in a case where a 3D-modeled object is manufactured by an ink-jet process in particular out of different additive manufacturing processes.

The modeler may serve also as the position code former, and may form the position code by stacking layers of the modeling material excluding a part to be the position code. Also, in the additive manufacturing process, the position code may be formed by stacking layers of the modeling material one over another excluding a part to be the position code.

Since a space (open space or closed space) surrounded by the modeling material becomes the position code, there is no need of preparing a modeling material for forming the position code besides the modeling material for modeling the 3D-modeled object. Also, the ejector that ejects the modeling material for forming the position code does not need to be provided, and this helps achieve a simple apparatus configuration.

### Industrial Applicability

A manufacturing apparatus and a manufacturing method according to the present invention find applications in the manufacture of 3D-modeled objects by use of an additive manufacturing process.

### List of Reference Signs

- 1: manufacturing apparatus
- 20: modeling block (modeler)
- 21a: modeling material ejector (ink ejector)
- 21b: modeling material feeder (ink feeder)
- 30: information code forming block (information code former)
- 40: position code forming block (position code former, mark former)
- 50: 3D-modeled object
- 51: information code
- 52: position code
- 53: mark
- 61: modeling material
- 62: modeling material
- 71: information code
- 72: position code

## Claims

1. An apparatus (1) for manufacturing a 3D-modeled object (50), the apparatus (1) including a modeler (20) configured to stack layers of a modeling material (61, 62) one over another, the apparatus being configured to manufacture a 3D-modeled object (50) by additive manufacturing performed by the modeler (20), the apparatus (1) comprising:
an information code former (30) configured to form, inside the 3D-modeled object (50) modeled by the modeler (20), an information code (51, 71) obtained by encoding information for identifying the 3D-modeled object (50), and
**characterized in that** the apparatus further comprises
a position code former (40) configured to form, inside or on a surface of the 3D-modeled object (50), a position code (52, 72) obtained by encoding information indicating a formation position of the information code (51, 71) inside the 3D-modeled object (50).

2. The apparatus (1) for manufacturing a 3D-modeled object (50) according to claim 1, wherein
the position code former (40) forms the position code (52, 72) inside or on the surface of the 3D-modeled object (50) by using a modeling material (62), and
the modeling material (62) used to model the position code (52, 72) is different from a modeling material (61) used to model the 3D-modeled object (50).

3. The apparatus (1) for manufacturing a 3D-modeled object (50) according to claim 1, wherein
the position code former (40) forms the position code (52, 72) inside the 3D-modeled object (50) by using a modeling material (62),
the modeling material (62) used to model the position code (52, 72) is same as a modeling material (61) used to model the 3D-modeled object (50), and
the position code (52, 72) is formed inside the 3D-modeled object (50) by making the modeling material (61) used by the modeler (20) to model the 3D-modeled object (50) different in physical property from the modeling material (62) used by the position code former (40) to model the position code (52, 72).

4. The apparatus (1) for manufacturing a 3D-modeled object (50) according to any one of claims 1 to 3,
wherein
the modeler (20) serves also as at least either of the information code former (30) and the position code former (40).

5. The apparatus (1) for manufacturing a 3D-modeled object (50) according to any one of claims 1 to 4,
wherein
the information code former (30) serves also as the position code former (40).

6. The apparatus (1) for manufacturing a 3D-modeled object (50) according to any one of claims 1 to 5,
wherein
the position code (52, 72) includes information of at least one of an arrangement position of the information code (51, 71) in the 3D-modeled object (50), an arrangement direction of the information code (51, 71) as seen from a position of the position code (52, 72), and a distance between the position code (52, 72) and the information code (51, 71).

7. The apparatus (1) for manufacturing a 3D-modeled object (50) according to any one of claims 1 to 6, the apparatus (1) further comprising
a mark former (40) configured to form a mark (53) indicating that the position code (52, 72) exists in vicinity of the mark (53).

8. The apparatus (1) for manufacturing a 3D-modeled object (50) according to claim 7,
wherein
the position code former (40) serves also as the mark former (40).

9. The apparatus (1) for manufacturing a 3D-modeled object (50) according to claim 7 or 8,
wherein
the mark (53) is formed as any one selected from a letter, a numeral, a symbol, a sign, a seal, an emblem, a crest, a logo, a signature, a diagram, a characteristic shape, a pattern, and a combination of any of these.

10. The apparatus (1) for manufacturing a 3D-modeled object (50) according to any one of claims 1 to 9,
wherein
the modeler (20) includes
an ink ejector (21a) configured to eject ink as the modeling material (61, 62), and
an ink feeder (21b) configured to feed the ink to the ink ejector (21a).

11. The apparatus (1) for manufacturing a 3D-modeled object (50) according to claim 1, wherein
the modeler (20) serves also as the position code former (40), and forms the position code (52, 72) by stacking layers of the modeling material (61) excluding a part to be the position code (52, 72).

12. A method for manufacturing a 3D-modeled object (50), the method comprising
an additive manufacturing process in which a 3D-modeled object (50) is manufactured by stacking layers of a modeling material (62) one over another,
wherein,
in the additive manufacturing process,
an information code (51, 71) obtained by encoding information for identifying the 3D-modeled object (50) is formed in at least one layer arranged interior to outermost ones of the stacked layers of the modeling material (62), to thereby form the information code (51, 71) inside the 3D-modeled object (50), and
**characterized in that** in the additive manufacturing process further
a position code (52, 72) obtained by encoding information indicating a formation position of the information code (51, 71) is formed in at least one of the stacked layers of the modeling material (61), to thereby form the position code (52, 72) inside or on a surface of the 3D-modeled object (50).

13. The method for manufacturing a 3D-modeled object (50) according to claim 12, wherein,
in the additive manufacturing process, the position code (52, 72) is formed inside or on the surface of the 3D-modeled object (50) by using a modeling material (62) that is different from the modeling material (61) used to model the 3D-modeled object (50).

14. The method for manufacturing a 3D-modeled object (50) according to claim 12, wherein,
in the additive manufacturing process, the position code (52, 72) is formed inside the 3D-modeled object (50) by using a same modeling material as the modeling material (61) used to model the 3D-modeled object (50), by making the modeling material (61) used to model the 3D-modeled object (50) different in physical property from the modeling material (62) used to model the position code (52, 72).

15. The method for manufacturing a 3D-modeled object (50) according to any one of claims 12 to 14,
wherein,
in the additive manufacturing process, a mark (53) indicating that the position code (52, 72) exists in vicinity of the mark (53) is further formed on the surface of the 3D-modeled object (50), at a position near the position code (52, 72).

16. The method for manufacturing a 3D-modeled object (50) according to any one of claims 12 to 14, the method further comprising:
a process of encoding the information for identifying the 3D-modeled object (50) into the information code (51, 71);
a process of determining an arrangement position of the information code (51, 71) inside the 3D-modeled object (50) based on information of a shape of the information code (51, 71);
a process of encoding the information indicating the formation position of the information code (51, 71) in the 3D-modeled object (50) into the position code (52, 72), and determining an arrangement position of the position code (52, 72) inside or on the surface of the 3D-modeled object (50); and
a process of creating merged data by merging modeling data for modeling the 3D-modeled object (50) three-dimensionally with the information code (51, 71) and the position code (52, 72) so as to arrange the information code (51, 71) and the position code (52, 72) each at the arrangement position thereof which has been determined,
wherein,
in the additive manufacturing process, the 3D-modeled object (50) is modeled based on the merged data by using at least one kind of modeling material (61, 62).

17. The method for manufacturing a 3D-modeled object (50) according to claim 15, the method further comprising:
a process of encoding the information for identifying the 3D-modeled object (50) into the information code (51, 71),
a process of determining an arrangement position of the information code (51, 71) inside the 3D-modeled object (50) based on information of a shape of the information code (51, 71),
a process of encoding the information indicating the formation position of the information code (51, 71) in the 3D-modeled object (50) into the position code (52, 72), and determining an arrangement position of the position code (52, 72) inside or on the surface of the 3D-modeled object (50);
a process of creating data of the mark (53), and determining an arrangement position of the mark (53) on the surface of the 3D-modeled object (50), and
a process of creating merged data by merging modeling data for modeling the 3D-modeled object (50) three-dimensionally with the information code (51, 71), the position code (52, 72), and the data of the mark (53) so as to arrange the information code (51, 71), the position code (52, 72), and the mark (53) each at the arrangement position thereof which has been determined,
wherein
in the additive manufacturing process, the 3D-modeled object (50) is modeled based on the merged data by using at least one kind of modeling material (61, 62).

18. The method for manufacturing a 3D-modeled object (50) according to claim 16 or 17, the method further comprising
a process of receiving the information for identifying the 3D-modeled object (50), the information being a target of encoding into the information code (51, 71).

19. The method for manufacturing a 3D-modeled object (50) according to any one of claims 12 to 18,
wherein
in the additive manufacturing process, the 3D-modeled object (50) is modeled by using ink as the modeling material (61).

20. The method for manufacturing a 3D-modeled object (50) according to claim 12,
wherein,
in the additive manufacturing process, the position code (52, 72) is formed by stacking layers of the modeling material (61) one over another excluding a part to be the position code (52, 72).

## Patentansprüche

1. Einrichtung (1) zur Herstellung eines 3D-modellierten Objekts (50), die Einrichtung (1) enthaltend einen Modellierer (20), der konfiguriert ist, um Schichten eines Modelliermaterials (61, 62) übereinanderzustapeln, wobei die Einrichtung konfiguriert ist, um ein 3D-modelliertes Objekt (50) durch additive Herstellung, die durch den Modellierer (20) ausgeführt wird, herzustellen, die Einrichtung (1) umfassend:
einen Informationscodebilder (30), der konfiguriert ist, um innerhalb des 3D-modellierten Objekts (50), das durch den Modellierer (20) modelliert wird, einen Informationscode (51, 71) zu bilden, der durch Codieren von Informationen zum Identifizieren des 3D-modellierten Objekts (50) erhalten wird, und
**dadurch gekennzeichnet, dass** die Einrichtung weiter umfasst
einen Positionscodebilder (40), der konfiguriert ist, um innerhalb oder auf einer Fläche des 3D-modellierten Objekts (50) einen Positionscode (52, 72) zu bilden, der durch Codieren von Informationen erhalten wird, die eine Bildungsposition des Informationscodes (51, 71) innerhalb des 3D-modellierten Objekts (50) anzeigen.

2. Einrichtung (1) zur Herstellung eines 3D-modellierten Objekts (50) nach Anspruch 1, wobei
der Positionscodebilder (40) den Positionscode (52, 72) innerhalb oder auf der Fläche des 3D-modellierten Objekts (50) unter Verwendung eines Modelliermaterials (62) bildet und
das Modelliermaterial (62), das verwendet wird, um den Positionscode (52, 72) zu modellieren, sich von einem Modelliermaterial (61) unterscheidet, das verwendet wird, um das 3D-modellierte Objekt (50) zu modellieren.

3. Einrichtung (1) zur Herstellung eines 3D-modellierten Objekts (50) nach Anspruch 1, wobei
der Positionscodebilder (40) den Positionscode (52, 72) innerhalb des 3D-modellierten Objekts (50) unter Verwendung eines Modelliermaterials (62) bildet,
das Modelliermaterial (62), das verwendet wird, um den Positionscode (52, 72) zu modellieren, das gleiche wie ein Modelliermaterial (61) ist, das verwendet wird, um das 3D-modellierte Objekt (50) zu modellieren, und
der Positionscode (52, 72) innerhalb des 3D-modellierten Objekts (50) durch Unterschiedlichmachen des Modelliermaterials (61), das durch den Modellierer (20) verwendet wird, um das 3D-modellierte Objekt (50) zu modellieren, und des Modelliermaterials (62), das vom Positionscodebilder (40) verwendet wird, um den Positionscode (52, 72) zu modellieren, in Bezug auf eine physische Eigenschaft, gebildet wird.

4. Einrichtung (1) zur Herstellung eines 3D-modellierten Objekts (50) nach einem der Ansprüche 1 bis 3,
wobei
der Modellierer (20) auch als zumindest einer von dem Informationscodebilder (30) und dem Positionscodebilder (40) dient.

5. Einrichtung (1) zur Herstellung eines 3D-modellierten Objekts (50) nach einem der Ansprüche 1 bis 4,
wobei
der Informationscodebilder (30) auch als der Positionscodebilder (40) dient.

6. Einrichtung (1) zur Herstellung eines 3D-modellierten Objekts (50) nach einem der Ansprüche 1 bis 5,
wobei
der Positionscode (52, 72) Informationen von zumindest einer von einer Anordnungsposition des Informationscodes (51, 71) im 3D-modellierten Objekt (50), einer Anordnungsrichtung des Informationscodes (51, 71), wie von einer Position des Positionscodes (52, 72) aus gesehen, und einer Distanz zwischen dem Positionscode (52, 72) und dem Informationscode (51, 71) enthält.

7. Einrichtung (1) zur Herstellung eines 3D-modellierten Objekts (50) nach einem der Ansprüche 1 bis 6, die Einrichtung (1) weiter umfassend
einen Markierungsbilder (40), der konfiguriert ist, um eine Markierung (53) zu bilden, die anzeigt, dass der Positionscode (52, 72) in Nähe der Markierung (53) existiert.

8. Einrichtung (1) zur Herstellung eines 3D-modellierten Objekts (50) nach Anspruch 7,
wobei
der Positionscodebilder (40) auch als der Markierungsbilder (40) dient.

9. Einrichtung (1) zur Herstellung eines 3D-modellierten Objekts (50) nach Anspruch 7 oder 8,
wobei
die Markierung (53) als ein beliebiges, ausgewählt aus einem Buchstaben, einem Nummernzeichen, einem Symbol, einem Zeichen, einem Siegel, einem Emblem, einem Wappen, einem Logo, einer Signatur, einem Diagramm, einer charakteristischen Form, einem Muster und einer Kombination von diesen, gebildet ist.

10. Einrichtung (1) zur Herstellung eines 3D-modellierten Objekts (50) nach einem der Ansprüche 1 bis 9,
wobei
der Modellierer (20) enthält
einen Tintenausstoßer (21a), der konfiguriert ist, um Tinte als das Modelliermaterial (61, 62) auszustoßen, und
einen Tinteneinspeiser (21b), der konfiguriert ist, um die Tinte zum Tintenausstoßer (21a) einzuspeisen.

11. Einrichtung (1) zur Herstellung eines 3D-modellierten Objekts (50) nach Anspruch 1, wobei
der Modellierer (20) auch als der Positionscodebilder (40) dient und den Positionscode (52, 72) durch Stapeln von Schichten des Modelliermaterials (61), ausschließlich eines Teils, der der Positionscode (52, 72) sein soll, bildet.

12. Verfahren zur Herstellung eines 3D-modellierten Objekts (50), das Verfahren umfassend
einen additiven Herstellungsprozess, in dem ein 3D-modelliertes Objekt (50) durch Übereinanderstapeln von Schichten eines Modelliermaterials (62) hergestellt wird,
wobei,
im additiven Herstellungsprozess,
ein Informationscode (51, 71), der durch Codieren von Informationen zum Identifizieren des 3D-modellierten Objekts (50) erhalten wird, in zumindest einer Schicht gebildet wird, die innerhalb von äußersten der gestapelten Schichten des Modelliermaterials (62) angeordnet ist, um dadurch den Informationscode (51, 71) innerhalb des 3D-modellierten Objekts (50) zu bilden, und
**dadurch gekennzeichnet, dass** im additiven Herstellungsprozess weiter
ein Positionscode (52, 72), der durch Codieren von Informationen erhalten wird, die eine Bildungsposition des Informationscodes (51, 71) anzeigen, in zumindest einer der gestapelten Schichten des Modelliermaterials (61) gebildet wird, um dadurch den Positionscode (52, 72) innerhalb oder auf einer Fläche des 3D-modellierten Objekts (50) zu bilden.

13. Verfahren zur Herstellung eines 3D-modellierten Objekts (50) nach Anspruch 12,
wobei,
im additiven Herstellungsprozess der Positionscode (52, 72) innerhalb oder auf der Fläche des 3D-modellierten Objekts (50) unter Verwendung eines Modelliermaterials (62) gebildet wird, das sich vom Modelliermaterial (61), das verwendet wird, um das 3D-modellierte Objekt (50) zu modellieren, unterscheidet.

14. Verfahren zur Herstellung eines 3D-modellierten Objekts (50) nach Anspruch 12,
wobei,
im additiven Herstellungsprozess der Positionscode (52, 72) innerhalb des 3D-modellierten Objekts (50) unter Verwendung eines gleichen Modelliermaterials wie das Modelliermaterial (61), das verwendet wird, um das 3D-modellierte Objekt (50) zu modellieren, durch Unterschiedlichmachen des Modelliermaterials (61), das verwendet wird, um das 3D-modellierte Objekt (50) zu modellieren, und des Modelliermaterials (62), das verwendet wird, um den Positionscode (52, 72) zu modellieren, in Bezug auf eine physische Eigenschaft, gebildet wird.

15. Verfahren zur Herstellung eines 3D-modellierten Objekts (50) nach einem der Ansprüche 12 bis 14,
wobei,
im additiven Herstellungsprozess, eine Markierung (53), die anzeigt, dass der Positionscode (52, 72) in Nähe der Markierung (53) existiert, weiter auf der Fläche des 3D-modellierten Objekts (50) an einer Position nahe dem Positionscode (52, 72) gebildet wird.

16. Verfahren zur Herstellung eines 3D-modellierten Objekts (50) nach einem der Ansprüche 12 bis 14, das Verfahren weiter umfassend:
einen Prozess eines Codierens der Informationen zum Identifizieren des 3D-modellierten Objekts (50) in den Informationscode (51, 71);
einen Prozess eines Ermittelns einer Anordnungsposition des Informationscodes (51, 71) innerhalb des 3D-modellierten Objekts (50), basierend auf Informationen von einer Form des Informationscodes (51, 71);
einen Prozess eines Codierens der Informationen, die die Bildungsposition des Informationscodes (51, 71) im 3D-modellierten Objekt (50) anzeigen, in den Positionscode (52, 72) und eines Ermittelns einer Anordnungsposition des Positionscodes (52, 72) innerhalb oder auf der Fläche des 3D-modellierten Objekts (50); und
einen Prozess eines Erzeugens zusammengefügter Daten durch Zusammenfügen von Modellierdaten zum dreidimensionalen Modellieren des 3D-modellierten Objekts (50) mit dem Informationscode (51, 71) und dem Positionscode (52, 72), um den Informationscode (51, 71) und den Positionscode (52, 72) jeweils an der Anordnungsposition davon anzuordnen, die ermittelt wurde,
wobei,
im additiven Herstellungsprozess das 3D-modellierte Objekt (50) basierend auf den zusammengefügten Daten unter Verwendung zumindest einer Art von Modelliermaterial (61, 62) modelliert wird.

17. Verfahren zur Herstellung eines 3D-modellierten Objekts (50) nach Anspruch 15, das Verfahren weiter umfassend:
einen Prozess eines Codierens der Informationen zum Identifizieren des 3D-modellierten Objekts (50) in den Informationscode (51, 71),
einen Prozess eines Ermittelns einer Anordnungsposition des Informationscodes (51, 71) innerhalb des 3D-modellierten Objekts (50), basierend auf Informationen von einer Form des Informationscodes (51, 71),
einen Prozess eines Codierens der Informationen, die die Bildungsposition des Informationscodes (51, 71) im 3D-modellierten Objekt (50) anzeigen, in den Positionscode (52, 72) und eines Ermittelns einer Anordnungsposition des Positionscodes (52, 72) innerhalb oder auf der Fläche des 3D-modellierten Objekts (50);
einen Prozess eines Erzeugens von Daten der Markierung (53) und eines Ermittelns einer Anordnungsposition der Markierung (53) auf der Fläche des 3D-modellierten Objekts (50) und
einen Prozess eines Erzeugens zusammengefügter Daten durch Zusammenfügen von Modellierdaten zum dreidimensionalen Modellieren des 3D-modellierten Objekts (50) mit dem Informationscode (51, 71), dem Positionscode (52, 72) und den Daten der Markierung (53), um den Informationscode (51, 71), den Positionscode (52, 72) und die Markierung (53) jeweils an der Anordnungsposition davon anzuordnen, die ermittelt wurde,
wobei
im additiven Herstellungsprozess das 3D-modellierte Objekt (50) basierend auf den zusammengefügten Daten unter Verwendung zumindest einer Art von Modelliermaterial (61, 62) modelliert wird.

18. Verfahren zur Herstellung eines 3D-modellierten Objekts (50) nach Anspruch 16 oder 17, das Verfahren weiter umfassend
einen Prozess eines Empfangens der Informationen zum Identifizieren des 3D-modellierten Objekts (50), wobei die Informationen ein Ziel eines Codierens in den Informationscode (51, 71) sind.

19. Verfahren zur Herstellung eines 3D-modellierten Objekts (50) nach einem der Ansprüche 12 bis 18,
wobei
im additiven Herstellungsprozess, das 3D-modellierte Objekt (50) unter Verwendung einer Tinte als das Modelliermaterial (61) modelliert wird.

20. Verfahren zur Herstellung eines 3D-modellierten Objekts (50) nach Anspruch 12,
wobei,
im additiven Herstellungsprozess, der Positionscode (52, 72) durch Übereinanderstapeln von Schichten des Modelliermaterials (61), ausschließlich eines Teils, der der Positionscode (52, 72) sein soll, gebildet wird.

## Revendications

1. Appareil (1) pour fabriquer un objet modélisé en 3D (50), l'appareil (1) comportant un modélisateur (20) configuré pour empiler des couches d'un matériau de modélisation (61, 62) les unes sur les autres, l'appareil étant configuré pour fabriquer un objet modélisé en 3D (50) par une fabrication additive effectuée par le modélisateur (20), l'appareil (1) comprenant :
un formateur de code d'informations (30) configuré pour former, à l'intérieur de l'objet modélisé en 3D (50) modélisé par le modélisateur (20), un code d'informations (51, 71) obtenu en codant des informations permettant d'identifier l'objet modélisé en 3D (50), et
**caractérisé en ce que** l'appareil comprend en outre
un formateur de code de position (40) configuré pour former, à l'intérieur ou sur une surface de l'objet modélisé en 3D (50), un code de position (52, 72) obtenu en codant des informations indiquant une position de formation du code d'informations (51, 71) à l'intérieur de l'objet modélisé en 3D (50).

2. Appareil (1) pour fabriquer un objet modélisé en 3D (50) selon la revendication 1, dans lequel
le formateur de code de position (40) forme le code de position (52, 72) à l'intérieur ou sur la surface de l'objet modélisé en 3D (50) en utilisant un matériau de modélisation (62), et
le matériau de modélisation (62) utilisé pour modéliser le code de position (52, 72) est différent d'un matériau de modélisation (61) utilisé pour modéliser l'objet modélisé en 3D (50).

3. Appareil (1) pour fabriquer un objet modélisé en 3D (50) selon la revendication 1, dans lequel
le formateur de code de position (40) forme le code de position (52, 72) à l'intérieur de l'objet modélisé en 3D (50) en utilisant un matériau de modélisation (62),
le matériau de modélisation (62) utilisé pour modéliser le code de position (52, 72) est identique à un matériau de modélisation (61) utilisé pour modéliser l'objet modélisé en 3D (50), et
le code de position (52, 72) est formé à l'intérieur de l'objet modélisé en 3D (50) en rendant le matériau de modélisation (61) utilisé par le modélisateur (20) pour modéliser l'objet modélisé en 3D (50) différent, en termes de propriété physique, du matériau de modélisation (62) utilisé par le formateur de code de position (40) pour modéliser le code de position (52, 72).

4. Appareil (1) pour fabriquer un objet modélisé en 3D (50) selon l'une quelconque des revendications 1 à 3,
dans lequel
le modélisateur (20) sert également au moins de l'un ou l'autre du formateur de code d'informations (30) et du formateur de code de position (40).

5. Appareil (1) pour fabriquer un objet modélisé en 3D (50) selon l'une quelconque des revendications 1 à 4,
dans lequel
le formateur de code d'informations (30) sert également de formateur de code de position (40).

6. Appareil (1) pour fabriquer un objet modélisé en 3D (50) selon l'une quelconque des revendications 1 à 5,
dans lequel
le code de position (52, 72) comporte des informations sur au moins une parmi une position d'agencement du code d'informations (51, 71) dans l'objet modélisé en 3D (50), une direction d'agencement du code d'informations (51, 71) vue depuis une position du code de position (52, 72), et une distance entre le code de position (52, 72) et le code d'informations (51, 71).

7. Appareil (1) pour fabriquer un objet modélisé en 3D (50) selon l'une quelconque des revendications 1 à 6, l'appareil (1) comprenant en outre
un formateur de marque (40) configuré pour former une marque (53) indiquant que le code de position (52, 72) se trouve à proximité de la marque (53).

8. Appareil (1) pour fabriquer un objet modélisé en 3D (50) selon la revendication 7, dans lequel
le formateur de code de position (40) sert également de formateur de marque (40).

9. Appareil (1) pour fabriquer un objet modélisé en 3D (50) selon les revendications 7 ou 8,
dans lequel
la marque (53) est formée comme l'un quelconque choisi parmi une lettre, un chiffre, un symbole, un signe, un sceau, un emblème, un écusson, un logo, une signature, un schéma, une forme caractéristique, un motif, et un mélange de n'importe lesquels de ces éléments.

10. Appareil (1) pour fabriquer un objet modélisé en 3D (50) selon l'une quelconque des revendications 1 à 9,
dans lequel
le modélisateur (20) comporte
un éjecteur d'encre (21a) configuré pour éjecter de l'encre servant de matériau de modélisation (61, 62), et
un distributeur d'encre (21b) configuré pour distribuer l'encre à l'éjecteur d'encre (21a).

11. Appareil (1) pour fabriquer un objet modélisé en 3D (50) selon la revendication 1, dans lequel
le modélisateur (20) sert également de formateur de code de position (40), et forme le code de position (52, 72) en empilant des couches du matériau de modélisation (61) en excluant une partie destinée à être le code de position (52, 72).

12. Procédé pour fabriquer un objet modélisé en 3D (50), le procédé comprenant
un processus de fabrication additive dans lequel un objet modélisé en 3D (50) et fabriqué en empilant des couches d'un matériau de modélisation (62) les unes sur les autres,
dans lequel,
dans le processus de fabrication additive,
un code d'informations (51, 71) obtenu en codant des informations permettant d'identifier l'objet modélisé en 3D (50) est formé dans au moins une couche agencée à l'intérieur par rapport aux couches empilées du matériau de modélisation (62) les plus à l'extérieur, pour former ainsi le code d'informations (51, 71) à l'intérieur de l'objet modélisé en 3D (50), et
**caractérisé en ce que** dans le processus de fabrication additive, en outre
un code de position (52, 72) obtenu en codant des informations indiquant une position de formation du code d'informations (51, 71) est formé dans au moins une des couches empilées du matériau de modélisation (61), pour former ainsi le code de position (52, 72) à l'intérieur ou sur une surface de l'objet modélisé en 3D (50).

13. Procédé pour fabriquer un objet modélisé en 3D (50) selon la revendication 12, dans lequel,
dans le processus de fabrication additive, le code de position (52, 72) est formé à l'intérieur ou sur la surface de l'objet modélisé en 3D (50) en utilisant un matériau de modélisation (62) qui est différent du matériau de modélisation (61) utilisé pour modéliser l'objet modélisé en 3D (50).

14. Procédé pour fabriquer un objet modélisé en 3D (50) selon la revendication 12, dans lequel,
dans le processus de fabrication additive, le code de position (52, 72) est formé à l'intérieur de l'objet modélisé en 3D (50) en utilisant un matériau de modélisation identique au matériau de modélisation (61) utilisé pour modéliser l'objet modélisé en 3D (50), en rendant le matériau de modélisation (61) utilisé pour modéliser l'objet modélisé en 3D (50) différent, en termes de propriété physique, du matériau de modélisation (62) utilisé pour modéliser le code de position (52, 72).

15. Procédé pour fabriquer un objet modélisé en 3D (50) selon l'une quelconque des revendications 12 à 14,
dans lequel,
dans le processus de fabrication additive, une marque (53) indiquant que le code de position (52, 72) se trouve à proximité de la marque (53) est formée en outre sur la surface de l'objet modélisé en 3D (50), dans une position proche du code de position (52, 72).

16. Procédé pour fabriquer un objet modélisé en 3D (50) selon l'une quelconque des revendications 12 à 14, le procédé comprenant en outre :
un processus consistant à coder les informations permettant d'identifier l'objet modélisé en 3D (50) en le code d'informations (51, 71) ;
un processus consistant à déterminer une position d'agencement du code d'informations (51, 71) à l'intérieur de l'objet modélisé en 3D (50) sur la base d'informations sur une forme du code d'informations (51, 71) ;
un processus consistant à coder les informations indiquant la position de formation du code d'informations (51, 71) dans l'objet modélisé en 3D (50) en le code de position (52, 72), et à déterminer une position d'agencement du code de position (52, 72) à l'intérieur ou sur la surface de l'objet modélisé en 3D (50) ; et
un processus consistant à créer des données fusionnées en fusionnant des données de modélisation pour modéliser l'objet modélisé en 3D (50) de façon tridimensionnelle avec le code d'informations (51, 71) et le code de position (52, 72) de manière à agencer le code d'informations (51, 71) et le code de position (52, 72) chacun dans la position d'agencement de celui-ci qui a été déterminée,
dans lequel,
dans le processus de fabrication additive, l'objet modélisé en 3D (50) est modélisé sur la base des données fusionnées en utilisant au moins un type de matériau de modélisation (61, 62).

17. Procédé pour fabriquer un objet modélisé en 3D (50) selon la revendication 15, le procédé comprenant en outre :
un processus consistant à coder les informations permettant d'identifier l'objet modélisé en 3D (50) en le code d'informations (51, 71),
un processus consistant à déterminer une position d'agencement du code d'informations (51, 71) à l'intérieur de l'objet modélisé en 3D (50) sur la base d'informations sur une forme du code d'informations (51, 71),
un processus consistant à coder les informations indiquant la position de formation du code d'informations (51, 71) dans l'objet modélisé en 3D (50) en le code de position (52, 72), et à déterminer une position d'agencement du code de position (52, 72) à l'intérieur ou sur la surface de l'objet modélisé en 3D (50) ;
un processus consistant à créer des données sur la marque (53), et à déterminer une position d'agencement de la marque (53) sur la surface de l'objet modélisé en 3D (50), et
un processus consistant à créer des données fusionnées en fusionnant des données de modélisation pour modéliser l'objet modélisé en 3D (50) de façon tridimensionnelle avec le code d'informations (51, 71), le code de position (52, 72), et les données sur la marque (53) de manière à agencer le code d'informations (51, 71), le code de position (52, 72), et la marque (53) chacun dans la position d'agencement de celui-ci qui a été déterminée,
dans lequel
dans le processus de fabrication additive, l'objet modélisé en 3D (50) est modélisé sur la base des données fusionnées en utilisant au moins un type de matériau de modélisation (61, 62).

18. Procédé pour fabriquer un objet modélisé en 3D (50) selon la revendication 16 ou 17, le procédé comprenant en outre
un processus consistant à recevoir les informations permettant d'identifier l'objet modélisé en 3D (50), les informations étant une cible de codage dans le code d'informations (51, 71).

19. Procédé pour fabriquer un objet modélisé en 3D (50) selon l'une quelconque des revendications 12 à 18,
dans lequel
dans le processus de fabrication additive, l'objet modélisé en 3D (50) est modélisé en utilisant de l'encre comme matériau de modélisation (61).

20. Procédé pour fabriquer un objet modélisé en 3D (50) selon la revendication 12, dans lequel,
dans le processus de fabrication additive, le code de position (52, 72) est formé en empilant des couches du matériau de modélisation (61) les unes sur les autres en excluant une partie destinée à être le code de position (52, 72).
